Europäisches Patentamt

European Patent Office

Office européen des brevets

(19)

(11) **EP 1 418 777 A1**

(12) ## EUROPEAN PATENT APPLICATION

(43) Date of publication:
**12.05.2004 Bulletin 2004/20**

(51) Int Cl.⁷: $H04Q\ 7/36$

(21) Application number: **03364028.5**

(22) Date of filing: **05.11.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **08.11.2002 FR 0214144**<br><br>(71) Applicant: **Melco Mobile Communications Europe (SA)**<br>**35510 Cesson Sévigné (FR)** | (72) Inventors:<br>• **Voyer, Nicolas**<br>  **MELCO MOB.COMM. EUROPE (SA)**<br>  **35576 Cesson Sevigne (FR)**<br>• **Bellec, Martial**<br>  **MELCO MOB.COMM. EUROPE (SA)**<br>  **35576 Cesson Sevigne (FR)**<br><br>(74) Representative: **Bentz, Jean-Paul**<br>**Cabinet Ballot**<br>**4 rue du Général Hoche**<br>**BP 855**<br>**56100 Lorient (FR)** |

(54) **Method and system for reducing the dead zones in a UMTS system**

(57) The present invention relates to a method and a system of reducing the dead zones in a third-generation mobile telecommunication system (UMTS). When a mobile station MS in communication with a base station BS1 comprised within a first access network gives rise to dead zones on the uplinks of a base station BS2 comprised within a second access network, the first and second access networks being separate and independent, then, according to the invention, criteria based on the uplink and/or the downlink between the mobile station MS and the first BS1 base station and/or the second BS2 base station are defined, if one or other of the two are not complied with, the mobile station MS interrupts the radio duplex link implemented in communication with the first base station BS1. The communication between the mobile station MS and the first base station BS1 is then released. The power transmitted on the uplink by the mobile station MS then becomes zero and the degradation of the radio coverage of the cell of the second base station BS2 due to the mobile station MS disappears.

**FIG.1**

EP 1 418 777 A1

# EP 1 418 777 A1

**Description**

The present invention relates to a method and a system for reducing the dead zones in a third-generation mobile telecommunication system (UMTS).

In mobile telecommunication systems using wideband spread spectrum radio transmission technology such as the W-CDMA (Code Division Multiple Access) technology, a dead zone is characterised by the reducing of the radio coverage of a given radio cell.

This situation typically occurs when a W-CDMA type mobile station maintains a duplex radio service with a distant cell, hereinafter termed the service cell. If the downlink and uplink within the system are robust enough to maintain this duplex service between the mobile station and the service cell, this implies that the mobile station generates interference on the uplink of the cells located in the vicinity of the mobile station. Thus, the useful Signal-To-Interference ratio, denoted S/I, of all the mobile stations maintaining a link with one of the interfered cells, is degraded by the interference due to the uplink between the mobile station and its service cell. The further the mobile station is from its service cell the greater is this interference. When this interference becomes too strong, the mobile station enters a so-termed blinding zone. The blinding zone is thus defined as being a zone where the uplink of the mobile station becomes disturbing in respect of the neighbouring cells. The radio coverage of the neighbouring cells varies according to the magnitude of this interference. The cell is then said to "breathe" and the dead zone is defined as being the amplitude of this variation. This variation defines a geographical zone where the quality of the radio link cannot be guaranteed. One speaks of the uplink dead zone since it affects the uplink of the neighbouring cells.

The aim of the invention is to reduce the uplink dead zones in mobile telecommunication systems.

Hitherto, radio network planning has allowed effective reduction of the uplink dead zones in the following two cases.

In the first case, termed the "single-operator intra-frequency" case, the service cell and the interfered neighbouring cells share the same frequency and are managed in a manner harmonized by the same operator. In this case, the operator can supervise and therefore control all the cells to which a potential dead zone relates. In particular, it has the possibility of instructing, from its universal terrestrial radio access network (UTRAN), the relevant mobile station to change service cell and to hand over to one of the neighbouring cells. This can be performed in a "soft" manner. One then speaks of "soft handover". The handover operation then consists in temporarily summing the signals coming from the initial service cell and from a neighbouring cell and then, subsequently, in interrupting the link with the initial service cell, deemed to be too far away. The duplex service link is then maintained with the neighbouring cell. This handover can be triggered when radio criteria are satisfied. These criteria can be parameterized and generally consist in verifying that the radio level received or one of its quality estimators satisfies threshold conditions or belongs to specific intervals.

In the second case, termed the "single-operator inter-frequency" case, the service cell and the interfered neighbouring cells do not share the same frequency but they are nevertheless managed in a manner harmonized by the same operator. Just as for the previous case, the operator can control all the cells to which a potential dead zone relates. In particular, it can, from its UTRAN network, control the mobile station to change service cell and to handover to one of the neighbouring cells working on another frequency. This can be performed in a "hard" manner. One then speaks of "hard handover". This operation consists in first of all interrupting the link with the initial service cell, deemed to be too far away, then in re-establishing the link with a neighbouring cell. Communication is interrupted briefly during the handover. This interruption originates from the fact that the mobile station generally cannot simultaneously maintain two links on two different frequencies. In a manner similar to "intra-frequency" handover, this handover can be triggered when radio criteria are satisfied. It should be noted that the "hard handover" mechanism can also be applied to the first case.

Outside of the two cases described above, current network planning does not make it possible to reduce the uplink dead zones. For example, in the case where the service cell and the neighbouring cells are managed by different operators, the handover techniques described above cannot be used for the following reasons:

-   the networks of the operators are operated separately, in a distinct and nonharmonized manner, that is to say that no operational, physical or logical, link exists between their respective fixed networks in order to implement the above techniques,
-   from an economic point of view, the operator of the mobile station cannot afford handover thereof to an operator since he would lose income in favour of a competing operator.

In the subsequent description, this case will be termed the "multi-operator intra-frequency" or "multi-operator inter-frequency" case depending on whether the service cell and the neighbouring cells do or do not share the same frequency.

Likewise, in the "single-operator intra-frequency" or "single-operator inter-frequency" cases, if at least one of the neighbouring cells is managed in a manner which is not harmonized with the service cell, then we again have a case equivalent to the "multi-operator intra-frequency" case.

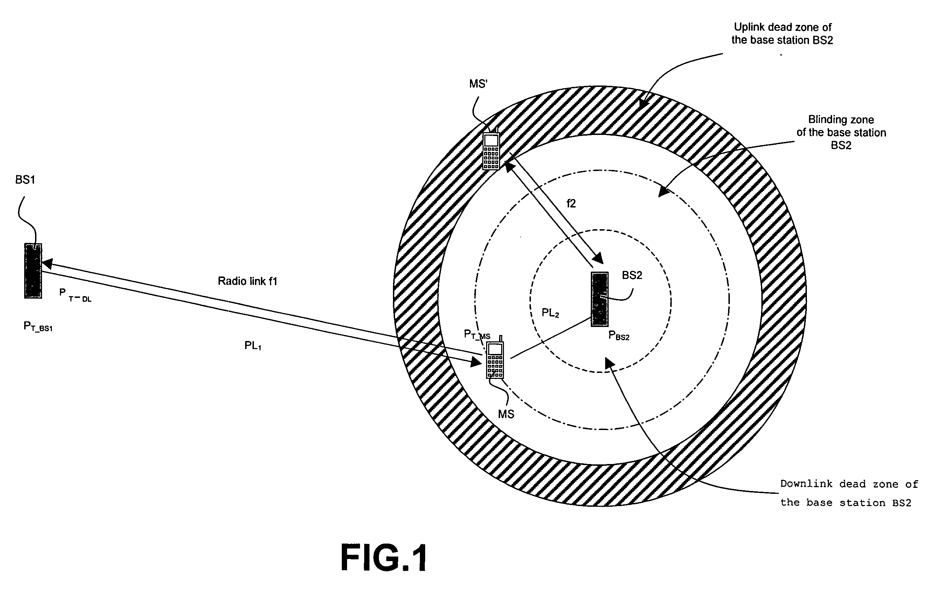

The "multi-operator inter-frequency" case is illustrated in Figure 1. In this figure, a mobile station MS maintains a radio link with a base station BS1 on a frequency f1. The base station BS1 transmits radio signals with a power $P_{T\_BS1}$. The propagation losses, also termed the "path loss", between the mobile station MS and the base station BS1 are denoted $PL_1$. The mobile station MS is approaching a base station BS2 communicating with a mobile station MS' on a frequency f2. The propagation losses $PL_1$ increase as the mobile station MS approaches the base station BS2 and recedes from the base station BS1. Additionally, in order to maintain a sufficient level of reception of the downlink by the mobile station MS, the base station BS1 power increases. Likewise, the mobile station MS maintains the level of reception of the uplink by the base station BS1 by increasing its transmit power on the frequency f1. The transmit power on the frequency f1 of the mobile station MS is hereinbelow denoted $P_{T\_MS}$. Also, since the propagation losses, denoted $PL_2$, from the mobile station MS to the base station BS2 decrease as the mobile station MS approaches the base station BS2, the power level received by the base station BS2 on the frequency f1 also increases.

There would be no problems if, given that the base station BS1 works on the frequency f1 and that the base station BS2 works on the frequency f2, the behaviour of the radiofrequency elements of the mobile station MS and of the base station BS2 were ideal. However, it appears that a portion of the power to be transmitted by the mobile station MS on the frequency f1 may be received by the base station BS2 as interference on the adjacent frequency f2. There may in fact be distortions of transmission and of reception. The transmitter of the mobile station MS may, on the one hand, generate leakage on the adjacent bands, but this "inter-frequency" leakage is limited by the ACLR parameter (standing for Adjacent Channel Leakage power Ratio) of the mobile station. This parameter is defined in recommendation 3GPP TS 25.101. The receiver of the base station BS2 may, on the other hand, receive energy not only from the desired band but also from the adjacent band, given that the reception filtering is not ideal. This imperfection is limited by the ACS parameter (standing for Adjacent Channel Selectivity) of the base station BS2. This parameter is defined in recommendation 3GPP TS 25.104.

Consequently, on the uplink between the mobile station MS' and the base station BS2, the interference $I_{MS->BS2}$ received by the base station BS2 and due to the mobile station MS is equal to:

$$I_{MS->BS2} = P_{T\_MS} \cdot PL_2 \cdot 10^{\frac{ACIR_{UL}}{10}} \qquad (1)$$

with

$$ACIR_{UL} = 10 \cdot \log_{10}(10^{\frac{-ACLR_{MS}}{10}} + 10^{\frac{-ACS_{BS2}}{10}}) \qquad <0 \qquad (in\ dB)$$

where- $ACLR_{MS}$ (>0) is the Adjacent Channel Leakage power Ratio of inter-frequency transmission of the mobile station MS, and

- $ACS_{BS2}$ (>0) is the inter-frequency Adjacent Channel Selectivity of the base station BS2.

In the same manner, on the downlink between the base station BS1 and the mobile station MS, the interference $I_{BS2->MS}$ received by the mobile station MS and due to the base station BS2 is equal to:

$$I_{BS2->MS} = P_{T\_BS2} \cdot PL_2 \cdot 10^{\frac{ACIR_{DL}}{10}} \qquad (2)$$

with

$$ACIR_{DL} = 10 \cdot \log_{10}(10^{\frac{-ACLR_{BS2}}{10}} + 10^{\frac{-ACS_{MS}}{10}}) \qquad <0 \qquad (in\ dB)$$

where- $ACLR_{BS2}$ (>0) is the Adjacent Channel Leakage power Ratio of the inter-frequency transmission of the base station BS2, and

- $ACS_{MS}$ (>0) is the inter-frequency Adjacent Channel Selectivity of the mobile station MS.

The interferences $I_{MS\text{->}BS2}$ and $I_{BS2\text{->}MS}$ increase as the mobile station MS approaches the base station BS2. In Figure 1, the blinding zone of the base station BS2 is bordered by a chain-dotted line around the base station BS2. The uplink dead zone due to the mobile station MS on the uplinks of the base station BS2 is depicted by a hatched ring and is representative of the "breathing" of the zone of coverage of the station BS2. The continuous-line outer circle of the hatched ring corresponds to the nominal zone of coverage of the base station BS2, in the absence of the mobile station MS. In this example, the mobile station MS' located in the uplink dead zone is thus no longer able to maintain a communication with the base station BS2. The downlink dead zone due to the base station BS2 on the downlink of the base station BS1 is indicated by a dashed circle in the figure. In this example, the blinding zone is larger than the downlink dead zone. The converse case is also possible.

The aim of the invention is to propose a method making it possible to reduce the uplink dead zones in the "multi-operator inter- or intra-frequency" or equivalent cases.

The main problem is that the fixed networks of the competing operators cannot allow their mobile stations to hand over to a cell managed by the competing operator.

According to the invention, it is proposed that the operators configure their fleet of respective mobile stations in such a way that they do not impede the other operator. Thus, as soon as a mobile station is liable to create an uplink dead zone, there is provision according to the invention to interrupt the service linkbetween this mobile station and its service cell.

The invention relates to a method of reducing at least one dead zone in relation to at least one base station, referred to as a second base station, said second base station being a neighbour of at least one other base station, referred to as a first base station, said first base station being comprised within a first access network, said second base station being comprised within a second access network, said first and second access networks being separate and independent,
characterized in that, when a first mobile station, currently communicating on at least one first frequency with said first base station, approaches said second base station communicating with at least one other mobile station, referred to as a second mobile station, on at least one second frequency, said method comprises the following steps of:

- estimation, by said first mobile station, of at least one first and one second parameters, said first parameter being representative of the power attenuation losses due to the propagation of the signals from said first base station to said first mobile station, said second parameter being representative of the power attenuation losses due to the propagation of the signals from said second base station to said first mobile station,
- determination, at least by said first mobile station, of a factor referred to as a geometry factor representative of a difference between said first and second estimated parameters,
- comparison of said determined geometry factor with a first predetermined threshold value, said first threshold value being representative of a dead zone on the uplink between said second mobile station and said second base station for at least said second frequency, said dead zone being referred to as an uplink dead zone, and/or a second predetermined threshold value, said second threshold value being representative of a dead zone on the downlink between said first base station and said first mobile station, said dead zone being referred to as a downlink dead zone, and
- if said geometry factor exceeds said first threshold value and/or said second threshold value, said first mobile station interrupts the radio link implemented on said first frequency between said first mobile station and said first base station.

Thus, the power transmitted from said mobile station to said first base station becomes zero and the degradation in the radio coverage of the cell of said second base station due to said first mobile station disappears.

Said radio link between said first mobile station and said first base station is interrupted by said first mobile station by triggering a radio link failure procedure.

According to a particular embodiment, said first threshold value, denoted $PL_{target\_UL\_dB}$, is determined according to the following formula:

$$PL_{t\,arg\,et\_UL\_dB} = \left(\frac{EC}{I_0}\right)_{UL\_dB} + I_{BS1\_dBm} - I_{BS2\_dBm} - x_{dB} - ACLR_{MS}$$

where:

- 
$$\left(\frac{EC}{I_0}\right)_{UL\_dB}$$

is a service quality objective on the uplink of said first mobile station,

- $I_{BS1\_dBm}$ is a total level of interference on the cell serviced by said first base station,
- $I_{BS2\_dBm}$ is a total level of interference on the cell serviced by said second base station,
- $x_{dB}$ is an uplink dead zone reduction parameter, and
- $ACLR_{MS}$ is an Adjacent Channel Leakage power Ratio of said second base station of the adjacent channels for the uplink of said first mobile station.

Likewise, said second threshold value, denoted $PL_{target\_DL\_dB}$, is determined according to the following formula:

$$PL_{t\,arg\,et\_DL\_dB} = \left(\frac{EC}{I_0}\right)_{DL\_dB} + P_{T\_BS2\_dBm} - P_{T\_DL\_dBm} - ACS_{MS} - z_{dB}$$

where:

-
$$\left(\frac{EC}{I_0}\right)_{DL\_dB}$$

is a service quality objective on the downlink,

- $P_{T\_BS2\_dBm}$ is a level of total power transmitted over the cell served by said second base station,
- $P_{T\_DL\_dBm}$ is a maximum level of transmit power allowed on the downlink by said first base station,
- $z_{dB}$ is a downlink dead zone reduction parameter, and
- $ACS_{MS}$ is an Adjacent Channel selectivity for said first mobile station.

These two threshold values are sent to the first mobile station of said first base station.

In a preferred embodiment, said first threshold value $PL_{target\_UL\_dB}$ is split into a first and a second partial threshold values, respectively denoted $PL_{1\_target\_UL\_dB}$ and $PL_{2\_target\_UL\_dB}$ and relating to said first and second base stations respectively, whose difference is equal to said first threshold value $PL_{target\_UL\_dB}$. Likewise, said second threshold value $PL_{target\_DL\_dB}$ is split into a first and a second partial threshold values, respectively denoted $PL_{1\_target\_DL\_dB}$ and $PL_{2\_target\_DL\_dB}$ and relating to said first and second base stations respectively, whose difference is equal to said second threshold value $PL_{target\_DL\_dB}$. These two partial threshold values are then sent to the first mobile station by said first base station.

In this embodiment, the comparison step consists in comparing said first and second parameters with said first and second partial threshold values respectively, said radio link failure procedure being triggered when said first parameter is less than said first partial threshold value relating to said uplink dead zone and said second parameter is greater than said second partial threshold value relating to said uplink dead zone and/or when said first parameter is less than said first partial threshold value relating to said downlink dead zone and said second parameter is greater than said second partial threshold value relating to said downlink dead zone.

To perform said comparison step, said first base station sends, beforehand, to said first mobile station at least one event or set of events relating to said radio link failure procedure to be triggered, said at least one event or set of events being selected from among the following events or sets of events:

- an event of type 1e and an event of type 1f,
- an event of type 2a,
- an event of type 2b,
- an event of type 2c and an event of type 2d.

To trigger said radio link failure procedure, said first base station sends, beforehand, to said first mobile station, an activation message comprising at least one information element, the value of said at least one information element being representative of the activation or of the non-activation of said radio link failure procedure.

This message also comprises at least one other information element, the value of said at least one other information element being representative of the type of said at least one event or set of events triggering said radio link failure procedure.

Preferably, the sending to said first mobile station of a message relating to at least one event or set of events is carried out if and only if said first mobile station is present within a zone which is potentially an uplink dead zone and/or a downlink dead zone.

Finally, before triggering said radio link failure procedure, said first mobile station advantageously sends to said first base station at least said first and second estimated parameters $PL_{1\_dB}$ and $PL_{2\_dB}$.

The invention also relates to a mobile telecommunication system comprising a plurality of base stations and of mobile stations, in which at least one base station and at least one mobile station implement in order to communicate a frequency division duplex mode and/or the technique of wideband code division multiple access, characterized in that it implements said method of reducing at least one dead zone in relation to at least one base station described hereinabove.

The invention also relates to a mobile station, referred to as a first mobile station, of the type comprising means for communicating in the direction of at least one first base station on at least one first frequency, said first base station being comprised within a first access network, characterized in that said mobile station comprises the following means of:

- estimation of at least one first and one second parameters, said first parameter being representative of the power attenuation losses due to the propagation of the signals from said first base station to said first mobile station, said second parameter being representative of the power attenuation losses due to the propagation of the signals from a second base station to said first mobile station, said second base station being a neighbour of said first base station, at least one other mobile station, referred to as a second mobile station, communicating towards said second base station on at least one second frequency, said second base station being comprised within a second access network, said first and second access networks being separate and independent,
- determination of a factor referred to as a geometry factor representative of a difference between said first and second estimated parameters,
- comparison of said determined geometry factor with a first predetermined threshold value, said first threshold value being representative of one dead zone from said second mobile station to said second base station for at least said second frequency, said dead zone being referred to as an uplink dead zone and/or a second predetermined threshold value, said second threshold value being representative of a dead zone from said first base station to said first mobile station, said dead zone being referred to as a downlink dead zone, and
- if said geometry factor exceeds said first threshold value and/or said second threshold value, said first mobile station interrupts the radio link implemented on said first frequency between said first mobile station and said first base station.

Other characteristics and advantages of the invention will become apparent on reading the detailed description which follows and which is given with reference to the appended drawings, among which:

- Figure 1, already described, illustrates the "inter-frequency multi-operator" case;
- Figure 2 represents the operations to be performed in the UTRAN network of the mobile station for the checking of a first criterion;
- Figure 3 represents the operations to be performed in the UTRAN network of the mobile station for the checking of a second criterion; and
- Figure 4 represents the operations to be performed in the mobile station in order to implement the process of the invention.

The invention will be more particularly described within the framework of Figure 1 ("multi-operator inter-frequency" case) without implying any limitation whatsoever on the scope of the invention to this case.

According to the invention, it is proposed that criteria on the uplink and/or the downlink between the mobile station MS and the base station BS1 be defined which, if one or other of the two are not complied with, triggers a radio failure procedure in the mobile station MS. The communication between the mobile station MS and the base station BS1 is then released. The uplink transmit power of the mobile station then becomes zero and the degradation of the radio coverage of the cell of the base station BS2 due to the mobile station MS disappears.

This procedure is in fact triggered by the mobile station of a given operator for the benefit of a plurality of mobile stations of another operator which are situated in a zone covered by the two operators. This procedure being applied in a reciprocal manner by at least part of the fleet of mobile stations of the competing operator, it is, when all is said and done, beneficial to both operators since it produces a decrease in the reciprocal dead zones in the network.

In the subsequent description, the following notation is used to describe the invention:

- $P_{T\_MS}$ is the total power transmitted by the mobile station MS;
- $P_{T\_BS1}$ is the total power transmitted by the base station BS1; it depends on the total payload of the traffic planned on the base station BS1;
- $P_{T\_BS2}$ is the total power transmitted by the base station BS2; it depends on the total payload of the traffic planned on the base station BS2;

- $P_{T\_DL}$ is a portion of $P_{T\_BS1}$ and represents the maximum transmit power allowed specifically on the downlink between the base station BS1 and the mobile station MS;
- $PL_1$ represents the propagation losses between the base station BS1 and the mobile station MS;
- $PL_2$ represents the propagation losses between the base station BS2 and the mobile station MS;
- $I_{MS->BS2}$ represents the level of the interference due to the mobile station MS and received by the base station BS2;
- $I_{BS2->MS}$ represents the level of the interference due to the base station BS2 and received by the mobile station MS;
- $I_{BS1->MS}$ represents the level of the interference due to the base station BS1 and received by the mobile station MS;
- $I_{BS2}$ represents the total level of interference on the cell served by the base station BS2;
- $I_{BS1}$ represents the total level of interference on the cell served by the base station BS1.

These same quantities $G_i$ are denoted $G_{i\_dB}$ or $G_{i\_dBm}$ when they are expressed in relative decibels or in radio power decibels (in milliwatts) respectively.

Determination of a criterion on the uplink between the mobile station MS and the base station BS1

As shown in Figure 1, when the mobile station MS is approaching the base station BS2, it gradually increases the noise threshold on the base station BS2. This leads to a reduction in the size of the cell of the base station BS2, gradually excluding the mobile stations at the limit of radio coverage of this cell which maintain a service with it. These mobile stations then handover to other neighbouring cells, causing an additional increase in the uplink dead zone.

Let us therefore seek to characterize the uplink dead zone effect introduced by the uplink of the mobile station MS. Let us consider, for example, that the level of interference of the base station BS2 is increased by y dB by the uplink of the mobile station MS. This increase degrades the radio coverage of the cell of the base station BS2. We fix y to be the maximum allowed level of interference.

The interference level $I_{MS->BS2}$ received by the base station BS2 and due to the mobile station MS can be expressed as a function of the total level of interference $I_{BS2}$ received by the base station BS2:

$$I_{MS->BS2} = I_{BS2} \cdot (10^{\frac{y}{10}} - 1) = x \cdot I_{BS2} \tag{3}$$

with y=10log(1+x)

Combination of equations (1) and (3) then gives:

$$P_{T\_MS} = \frac{x \cdot I_{BS2}}{PL_2} \cdot 10^{\frac{ACIR_{UL}}{10}} \tag{4}$$

Now, the transmit power $P_{T\_MS}$ of the mobile station is controlled in such a way that the quality objective of the uplink, denoted

$$\left(\frac{EC}{I_0}\right)_{UL},$$

between the mobile station MS and the base station BS1 is greater than

$$\frac{P_{T\_MS} \cdot PL_1}{I_{BS1}}.$$

It follows that:

$$\frac{PL_1}{PL_2} < \left(\frac{Ec}{I0}\right)_{UL} \cdot 10^{\frac{ACIR_{UL}}{10}} \cdot \frac{I_{BS1}}{x \cdot I_{BS2}}$$

In logarithmic notation, this gives:

$$PL_{1\_dB} - PL_{2\_dB} < \left(\frac{Ec}{I0}_{UL\_dB}\right) + I_{BS1\_dBm} - I_{BS2\_dBm} - x_{dB} + ACIR_{UL} \tag{5}$$

This inequality represents the limit condition for which the uplink of the mobile station MS disturbs the base station BS2 by y dB.

Insofar as the term $ACS_{BS2}$ can be neglected relative to the term $ACLR_{MS}$, this inequality becomes:

$$PL_{1\_dB} - PL_{2\_dB} < \left(\frac{Ec}{I0}\right)_{UL\_dB} + I_{BS1\_dBm} - I_{BS2\_dBm} - x_{dB} - ACLR_{MS} \tag{6}$$

<u>Determination of a criterion on the downlink between the base station BS1 and the mobile station MS</u>

Regarding the downlink between the mobile station MS and the base station BS1, it breaks when the power level required in order to hold the quality objective

$$\left(\frac{Ec}{I0}\right)_{DL}$$

no longer satisfies the following equation:

$$\left(\frac{Ec}{I0}\right)_{DL} > \frac{P_{T\text{-}DL} \cdot PL_1}{I_{BS1\text{->}MS} + I_{BS2\text{->}MS}} \tag{7}$$

Given that

$$I_{BS2\text{->}MS} = P_{T\_BS2} \cdot PL_2 \cdot 10^{\frac{ACIR_{DL}}{10}}$$

and that

$$I_{BS1\text{->}MS} = N_0 + (2 + \beta) \cdot P_{T\_BS1} \cdot PL_1,$$

we then have:

$$\left(\frac{Ec}{I0}\right)_{DL} > \frac{P_{T\text{-}DL} \cdot PL_1}{N_0 + (2 + \beta) \cdot P_{T\_BS1} \cdot PL_1 + P_{T\_BS2} \cdot PL_2 \cdot 10^{\frac{ACIR_{DL}}{10}}}$$

where $N_0$ is the background noise level,
and $\beta$ is the orthogonality factor of the downlink.

We then obtain:

$$\left(\frac{Ec}{I0}\right)_{DL} > \frac{P_{T\text{-}DL} \cdot PL_1}{N_0 + (2 + \beta) \cdot P_{T\_BS1} \cdot PL_1 + P_{T\_BS2} \cdot PL_2 \cdot 10^{\frac{ACIR_{DL}}{10}}}$$

hence

$$\frac{PL_1}{PL_2} < \left(\frac{Ec}{I0}\right)_{DL} \frac{\frac{N_0}{PL_2} + (2+\beta)\cdot P_{T\_BS1}\cdot \frac{PL_1}{PL_2} + P_{T\_BS2}\cdot 10^{\frac{ACIR_{DL}}{10}}}{P_{T\_DL}}$$

hence

$$\frac{PL_1}{PL_2}\left(1 - \frac{(2+\beta)\cdot P_{T\_BS1}}{P_{T\_DL}}\cdot\left(\frac{Ec}{Io}\right)_{DL}\right) < \left(\frac{Ec}{Io}\right)_{DL} \frac{\frac{N_0}{PL_2} + P_{T\_BS2}\cdot 10^{\frac{ACIR_{DL}}{10}}}{P_{T\_DL}}$$

hence

$$\frac{PL_1}{PL_2} < \left(\frac{Ec}{Io}\right)_{DL}\cdot \frac{\frac{N_0}{PL_2} + P_{T\_BS2}\cdot 10^{\frac{ACIR_{DL}}{10}}}{P_{T\_DL}\cdot\left(1 - \frac{(2+\beta)\cdot P_{T\_BS1}}{P_{T\_DL}}\cdot\left(\frac{Ec}{Io}\right)_{DL}\right)}$$

By neglecting the term $\frac{N_0}{PL_2}$ relative to the term

$$P_{T\_BS2}\cdot 10^{\frac{ACIR_{DL}}{10}},$$

we obtain in logarithmic notation:

$$PL_{1\_dB} - PL_{2\_dB} < \left(\frac{Ec}{I0}\right)_{DL\_dB} + P_{T\_BS2\_dBm} - P_{T\_DL\_dBm} + ACIR_{DL} - z_{dB}$$

with $z_{dB} = 10\log_{10}(z)$ and

$$z = 1 - \frac{(2+\beta)\cdot P_{T\_BS1}}{P_{T\_DL}}\cdot\left(\frac{Ec}{I0}\right)_{DL}$$

The above inequality represents the limit condition at which the downlink must be broken on account of the proximity of the base station BS2.

In the case where the parameter $ACLR_{BS2}$ can be neglected relative to the term $ACS_{MS}$, we finally obtain:

$$PL_{1\_dB} - PL_{2\_dB} < \left(\frac{Ec}{I0}\right)_{DL\_dB} + P_{T\_BS2\_dBm} - P_{T\_DL\_dBm} - ACS_{MS} - z_{dB} \qquad (8)$$

According to the invention, it is proposed that a radio link failure procedure be triggered when inequality (6) and/or (8) is/are no longer satisfied.

The two criteria defined above and represented by inequalities (6) and (8) both pertain to the quantity $PL_{1\_dB} - PL_{2\_dB}$, hereinafter called the geometry factor. The two inequalities are of the type:

$$PL_{1\_dB} - PL_{2\_dB} < PL_{t\,arg\,et\_dB}$$

This inequality is equivalent to the following system of equations:

$$PL_{1\_dB} < PL_{1\_t\,arg\,et\_dB} \qquad (9.1)$$

$$PL_{2\_dB} > PL_{2\_t\,arg\,et\_dB} \qquad (9.2)$$

$$PL_{1\_t\,arg\,et\_dB} - PL_{2\_t\,arg\,et\_dB} = PL_{t\,arg\,et\_dB} \qquad (9.3)$$

The inequalities 9.1 and 9.2 can be evaluated in the mobile station MS by activating actions, commonly called events, defined in recommendation RRC 25.331, section 14.2 of the UMTS FDD 3GPP standard.

It is for example possible to use an event of type 2b. This event verifies that: "the estimated quality of the frequency currently being used, denoted $Q_{used}$, is below a certain threshold $S_{used}$ and the estimated quality of an unused frequency, denoted $Q_{non\_used}$, is above a certain threshold $S_{non\_used}$". This event makes it possible to satisfy equations 9.1 and 9.2 by taking:

$$Q_{used} = PL_{1\_dB}$$

$$S_{used} = PL_{1\_t\,arg\,et\_dB}$$

$$Q_{non\_used} = PL_{2\_dB}$$

$$S_{non\_used} = PL_{2\_t\,arg\,et\_dB}.$$

When equations 9.1 and 9.2 are no longer satisfied, event 2b detects same.

The quantities $PL_{1\_dB}$ and $PL_{2\_dB}$ are measured by the mobile station MS. The quantity $PL_{2\_dB}$ can in particular be measured following the deployment of a compressed mode in the mobile station MS. The propagation losses are defined in paragraph 14.2.0a of recommendation RRC 25.331 as follows:

$$\text{Propagation losses in dB} = \text{Transmit power of the primary CPICH channel} - \text{CPICH RSCP}$$

The transmit power of the primary CPICH channel is transmitted to the mobile station MS by the UTRAN network of the base station BS1 and the CPICH RSCP parameter is a quantity measured by the mobile station MS as indicated in recommendation RRC 25.215, section 5.1.2 of the UMTS FDD 3GPP standard.

Moreover, the quantities $PL_{1\_t\,arg\,et\_dB}$ and $PL_{2\_t\,arg\,et\_dB}$ are defined beforehand in the UTRAN network of the base station BS1 so as to satisfy equation 9.3 and are supplied to the mobile station MS by the network.

As a variant, the evaluation of the inequalities 9.1 and 9.2 can be carried out by means of two distinct events, an event of type 2c and an event of type 2d. The event 2c verifies that "the estimated quality of the un-used frequency $Q_{non\_used}$ is above the threshold $S_{non\_used}$" and the event 2d verifies that "the estimated quality of the frequency currently being used $Q_{used}$ is below the threshold $S_{used}$". The evaluation of these two events is equivalent to that of the event 2b.

Implementation of the process of the invention in the UTRAN network of the base station SB1 and in the mobile station MS

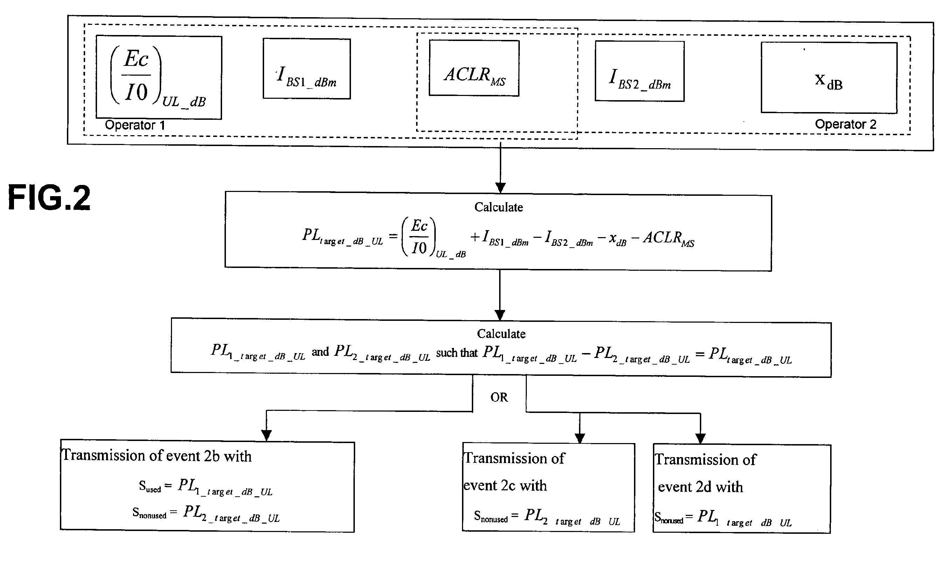

If the mobile station MS has to monitor the criterion pertaining to the uplink, it is necessary firstly for the fixed networks of the operators to perform the steps of Figure 2, namely:

a) the two operators determine the uplink criterion parameters

$$\left(\frac{Ec}{I0}\right)_{UL\_dB},$$

$I_{BS1\_dBm}$, $I_{BS2\_dBm}$, $ACLR_{MS}$, $x_{dB}$ and communicate them to each other; this step involves a prior agreement between the two operators, for example regarding certain geographical zones;

b) the UTRAN network of the operator of the mobile station MS calculates the uplink value $PL_{t\,arg\,et\_dB}$, hereinbelow denoted $PL_{t\,arg\,et\_UL\_dB}$, such that

$$PL_{t\,arg\,et\_UL\_dB} = \left(\frac{Ec}{I0}\right)_{UL\_dB} + I_{BS1\_dBm} - I_{BS2\_dBm} - x_{dB} - ACLR_{MS}\,;$$

c) the said UTRAN network of the operator of the mobile station MS determines values $PL_{1\_t\,arg\,et\_UL\_dB}$ and $PL_{2\_t\,arg\,et\_UL\_dB}$ such that $PL_{1\_t\,arg\,et\_UL\_dB} - PL_{2\_t\,arg\,et\_UL\_dB} = PL_{t\,arg\,et\_UL\_dB}\,;$

d) the said UTRAN network of the operator of the mobile station MS sends, in the form of one or more messages, the event 2b or the events 2c and 2d as well as the values $PL_{1\_t\,arg\,et\_UL\_dB}$ and $PL_{2\_t\,arg\,et\_UL\_dB}$ to the said mobile station MS.

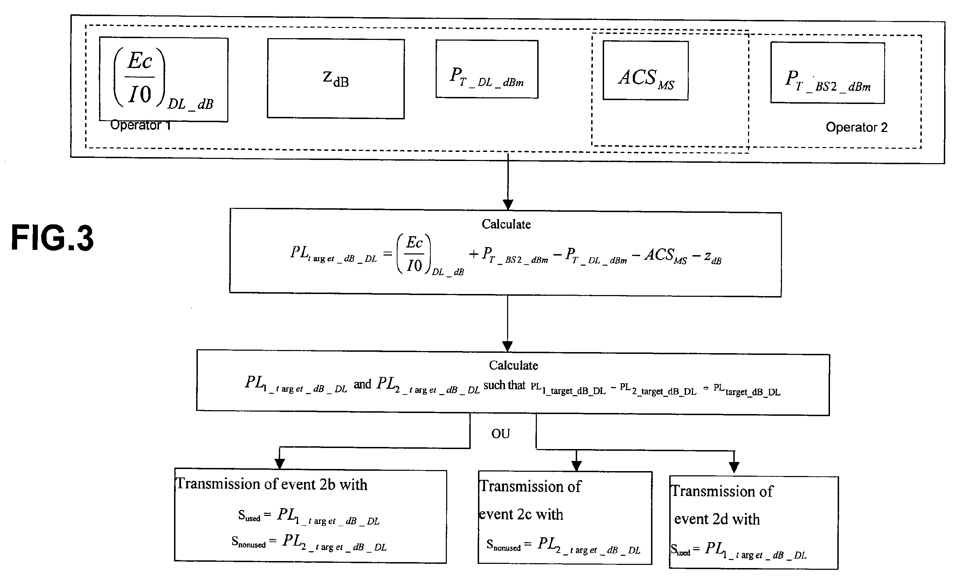

Likewise, if the mobile station MS has to monitor the criterion pertaining to the downlink, it is firstly necessary for the fixed networks of the operators to perform the steps of Figure 3, namely:

a) the two operators determine the downlink parameters

$$\left(\frac{Ec}{I0}\right)_{UL\_dB},$$

$P_{T\_BS2\_dBm}$, $P_{T\_DL\_dBm}$, $ACS_{MS}$, $z_{dB}$ and communicate them to one another;

b) the UTRAN network of the operator of the mobile station MS calculates the downlink value $PL_{t\,arg\,et\_dB}$, hereinafter denoted $PL_{t\,arg\,et\_LD\_dB}$, such that

$$PL_{t\,arg\,et\_DL\_dB} = \left(\frac{Ec}{I0}\right)_{UL\_dB} + P_{T\_BS2\_dBm} - P_{T\_DL\_dBm} + ACS_{MS} - z_{dB}\,;$$

c) the said UTRAN network of the operator of the mobile station MS determines values $PL_{1\_t\,arg\,et\_DL\_dB}$ and $PL_{2\_t\,arg\,et\_DL\_dB}$ such that $PL_{1\_t\,arg\,et\_DL\_dB} - PL_{2\_t\,arg\,et\_DL\_dB} \stackrel{}{=} PL_{t\,arg\,et\_DL\_dB}\,;$

d) the UTRAN network of the operator of the mobile station MS sends, in the form of one or more messages, the event 2b or the events 2c and 2d, as well as $PL_{1\_t\,arg\,et\_DL\_dB}$ and $PL_{2\_t\,arg\,et\_DL\_dB}$ to the mobile station MS.

In both cases, it is possible to define the values ( $PL_{1\_t\,arg\,et\_UL\_dB}$, $PL_{2\_t\,arg\,et\_UL\_dB}$) or ($PL_{1\_t\,arg\,et\_DL\_dB}$, $PL_{2\_t\,arg\,et\_DL\_dB}$) in step c) for example in the following manner:

-    $PL_{1\_target\_UL\_dB} = PL_{1max}$ or $PL_{1\_target\_DL\_dB} = PL_{1max}$, where $PL_{1max}$ is the maximum propagation loss allowed on the cell of the base station BS1;

-    $PL_{2\_target\_UL\_dB} = PL_{target\_UL\_dB} - PL_{1\_target\_UL\_dB}$ or $PL_{2\_target\_DL\_dB} = PL_{target\_DL\_dB} - PL_{1\_target\_DL\_dB}.$

At the level of the mobile station MS, it is possible to adopt four different strategies for triggering the radio link failure procedure:

-    the radio link failure procedure is triggered when inequality (6) is no longer satisfied; or
-    the radio link failure procedure is triggered when inequality (8) is no longer satisfied; or
-    the radio link failure procedure is triggered when both inequalities are no longer satisfied; or

- the radio link failure procedure is triggered as soon as one (the more constraining) of the two inequalities is no longer satisfied.

The method is more or less sensitive to the dead zones depending on whether one or other of these strategies is adopted.

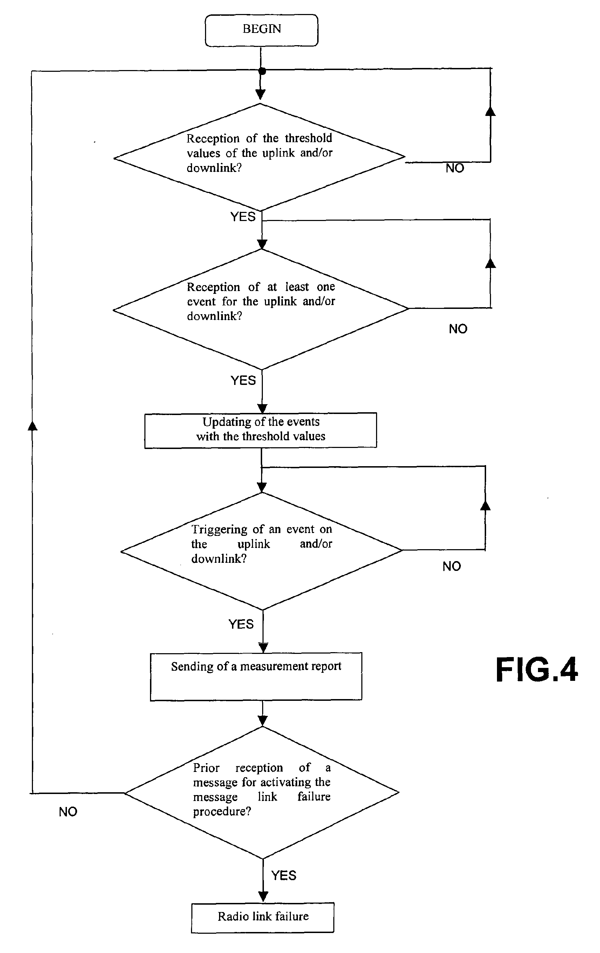

The process for triggering a radio link failure procedure in the mobile station is illustrated by Figure 4:

- the mobile station verifies that, according to the strategy adopted, threshold values ($PL_{1\_t\ \text{arg}\ et\_UL\_dB}$, $PL_{2\_t\ \text{arg}\ et\_UL\_dB}$) and/or ($PL_{1\_t\ \text{arg}\ et\_DL\_dB}$, $PL_{2\_t\ \text{arg}\ et\_DL\_dB}$) required for its implementation have been received (satisfaction of both inequalities or of just one);
- if so, the mobile station verifies that an event 2b or (2c+2d) has been received for the uplink and/or downlink in accordance with the strategy adopted;
- the event or events received are updated with the threshold values ( $PL_{1\_t\ \text{arg}\ et\_UL\_dB}$, $PL_{2\_t\ \text{arg}\ et\_UL\_dB}$) and/or ($PL_{1\_t\ \text{arg}\ et\_DL\_dB}$, $PL_{2\_t\ \text{arg}\ et\_DL\_dB}$) received;
- if the event or events required for updating the strategy is or are no longer verified, the mobile station MS sends a measurement report to the base station SB1; this measurement report comprises in particular the measurement values $PL_{1\_dB}$ and $PL_{2\_dB}$;
- finally, if a radio link failure procedure activation message has been received previously, the mobile station MS then triggers a radio link failure procedure; if the mobile station has not received this message previously, the above steps are repeated.

The effects of the triggering of a radio connection failure procedure in the mobile station MS are known and defined in recommendation RRC 25.331 of the 3GPP/UMTS standard:

- release of the uplink and downlink with the base station BS1; the uplink transmit power of the mobile station MS then becomes zero and the uplink dead zone due to the mobile station MS becomes zero;
- if possible, reselection of another base station having a better quality of service,
- if a new base station is reselected, sending of a reselection message to it, and reestablishment of the link with the new base station.

If no other base station can be reselected at the moment of the radio connection failure procedure, the mobile station repeats the reselection procedure regularly.

In an improved embodiment, the events are supplied only to the mobile stations which are liable to be present in a geographical zone to which a potential dead zone relates. For example, if a cell which is not located in the vicinity of cells of a competing operator, it is not necessary to send the events to the mobile stations which are located in this cell.

Moreover, the radio connection failure procedure is activated in the mobile station only if the latter is liable to be in a zone of the cell which could be a dead zone. For example, the radio connection failure procedure is not activated when the mobile station is very close to its service base station. This activation is performed by sending a dedicated message to the mobile station as indicated previously in Figure 4. Advantageously, this message for activating the radio connection failure procedure comprises an information element of the type of event (2b or 2c+2d) triggering the radio connection failure procedure.

Using the radio link failure procedure with events 2b or 2c+2d allows a-posteriori elimination of the dead zones due to the mobile station MS. However, this scheme can be regarded as passive since the dead zone effect has already begun when the radio link failure procedure is triggered.

According to an alternative embodiment, it is proposed that the dead zone effect be anticipated and that any transmission on the uplink be halted before the dead zone occurs. For this alternative, an event of type 2a is used, corresponding to a "change of best frequency" such as defined in recommendation RRC 25.331, section 14.2, of the UMTS FDD 3GPP standard.

This event is used to detect non-satisfaction of the equation $Q_{non\_best} \geq Q_{best} + H_{2a} / 2$ where $Q_{best}$ is the estimate of quality of a frequency regarded as being the "best frequency", $Q_{non\_best}$ is the estimate of quality of a frequency not regarded as the "best frequency" and $H_{2a}$ is a hysteresis value lying between 0 and 14.5 dB.

We take $Q_{best}=PL_{1\_dB}$ and $Q_{non\_best}=PL_{2\_dB}$ so as to satisfy $PL_{1\_dB} - PL_{2\_dB} \leq H_{2a} / 2$, $H_{2a}$ being a very low threshold. This more active alternative can be employed in a preventive manner and allows the fixed UTRAN network to anticipate any uplink dead zone degradation.

The invention has been described for the "multi-operator inter-frequency" case. Of course, if the service frequencies f1 and f2 are equal ("multi-operator intra-frequency" case), we will have $ACLR_{MS}=0$ dB in inequality (6) and $ACS_{MS}=0$ dB in inequality (8). Moreover, the events of type 1e and 1f defined in recommendation 25.331, section 14.1, of the 3GPP standard will be used in place of the events of type 2c and 2d respectively.

**Claims**

1. Method of reducing at least one dead zone in relation to at least one base station, referred to as a second base station (BS2), said second base station being a neighbour of at least one other base station, referred to as a first base station (BS1), said first base station being comprised within a first access network, said second base station being comprised within a second access network, said first and second access networks being separate and independent,

   **characterized in that**, when a first mobile station (MS), currently communicating on at least one first frequency (f1) with said first base station (BS1), approaches said second base station (BS2) communicating with at least one other mobile station (MS'), referred to as a second mobile station, on at least one second frequency (f2), said method comprises the following steps of:

   - estimation, by said first mobile station (MS), of at least one first ($PL_{1\_dB}$) and one second ($PL_{2\_dB}$) parameters, said first parameter ($PL_{1\_dB}$) being representative of the power attenuation losses due to the propagation of the signals from said first base station (BS1) to said first mobile station (MS), said second parameter ($PL_{2\_dB}$) being representative of the power attenuation losses due to the propagation of the signals from said second base station (BS2) to said first mobile station (MS),
   - determination, at least by said first mobile station (MS), of a factor referred to as a geometry factor ($PL_{1\_dB}$-$PL_{2\_dB}$) representative of a difference between said first ($PL_{1\_dB}$) and second ($PL_{2\_dB}$) estimated parameters,
   - comparison of said determined geometry factor with a first predetermined threshold value ($PL_{target\_UL\_dB}$), said first threshold value being representative of a dead zone on the uplink between said second mobile station (MS') and said second base station (BS2) for at least said second frequency (f2), said dead zone being referred to as an uplink dead zone, and/or a second predetermined threshold value ($PL_{target\_DL\_dB}$), said second threshold value being representative of a dead zone on the downlink between said first base station (BS1) and said first mobile station (MS), said dead zone being referred to as a downlink dead zone, and
   - if said geometry factor ($PL_{1\_dB}$-$PL_{2\_dB}$) exceeds said first threshold value ($PL_{target\_UL\_dB}$) and/or said second threshold value ($PL_{target\_DL\_dB}$), said first mobile station interrupts the radio duplex link implemented on said first frequency (f1) between said first mobile station (MS) and said first base station (BS1).

2. Method according to Claim 1, **characterized in that**, to interrupt said radio link between said first mobile station (MS) and said first base station (BS1), said first mobile station (MS) triggers a radio link failure procedure.

3. Method according to Claim 1 or 2, **characterized in that** said first threshold value ($PL_{target\_UL\_dB}$) is determined according to the following formula:

$$PL_{t\,arg\,et\_UL\_dB} = \left(\frac{Ec}{I0}\right)_{UL\_dB} + I_{BS1\_dBm} - I_{BS2\_dBm} - x_{dB} - ACLR_{MS}$$

   where:

   - 
$$\left(\frac{Ec}{I0}\right)_{UL\_dB}$$

   is a service quality objective on the uplink of said first mobile station,
   - $I_{BS1\_dBm}$ is a total level of interference on the cell served by said first base station,
   - $I_{BS2\_dBm}$ is a total level of interference on the cell served by said second base station,
   - $x_{dB}$ is an uplink dead zone reduction parameter, and
   - $ACLR_{MS}$ is an Adjacent Channel Leakage power Ratio of said second base station of the adjacent channels for the uplink of said first mobile station.

4. Method according to Claim 3, **characterized in that** said first base station (BS1) sends to said first mobile station (MS) a signal comprising at least one first message for configuring said first mobile station, said first configuration message comprising at least one information element, said at least one information element being representative of at least one parameter belonging to the group comprising:

- said service quality objective

$$\left(\frac{Ec}{I0}\right)_{UL\_dB}$$

on the uplink;
- said maximum level ($I_{BS1\_dBm}$) of interference allowed on the cell served by said first base station;
- said maximum level ($I_{BS2\_dBm}$) of interference allowed on the cell served by said second base station;
- said uplink dead zone reduction parameter ($x_{dB}$);
- said Adjacent Channel Leakage power Ratio ($ACLR_{MS}$) of said second base station of the adjacent channels for the uplink of said first mobile station; and
- said first threshold value ($PL_{target\_UL\_dB}$).

5. Method according to any of Claims 1 to 4, **characterized in that** said second threshold value ($PL_{target\_DL\_dB}$) is determined according to the following formula:

$$PL_{t\,arg\,et\_DL\_dB} = \left(\frac{Ec}{I0}\right)_{DL\_dB} + P_{T\_BS2\_dBm} - P_{T\_DL\_dBm} - ACS_{MS} - z_{dB}$$

where:

-

$$\left(\frac{Ec}{I0}\right)_{DL\_dB}$$

is a service quality objective on the downlink,
- $P_{T\_BS2\_dBm}$ is a level of total power transmitted over the cell served by said second base station,
- $P_{T\_DL\_dBm}$ is a maximum level of transmit power permitted on the downlink by said first base station,
- $z_{dB}$ is a downlink dead zone reduction parameter, and
- $ACS_{MS}$ is an Adjacent Channel Selectivity of said first mobile station.

6. Method according to Claim 5, **characterized in that** said first base station (BS1) sends to said first mobile station (MS) a signal comprising at least one second message for configuring said first mobile station, said second configuration message comprising at least one information element, said at least one information element being representative of at least one parameter belonging to the group comprising:

- said service quality objective

$$\left(\frac{Ec}{I0}\right)_{DL\_dB}$$

on the downlink;
- said level ($P_{T\_BS2\_dBm}$) of total power transmitted over the cell served by said second base station;
- said maximum level ($P_{T\_DL\_dBm}$) of transmit power allowed on the downlink by said first base station;
- said downlink dead zone reduction parameter ($z_{dB}$);
- said Adjacent Channel Selectivity ($ACS_{MS}$) of said first mobile station; and
- said second threshold value ($PL_{target\_DL}$).

7. Method according to any of Claims 1 to 5, **characterized in that** at least said first ($PL_{target\_UL-dB}$) and/or second ($PL_{target\_DL\_dB}$) threshold value is split into at least first ($PL_{1\_target\_UL\_dB}$, $PL_{1\_target\_DL\_dB}$) and/or second ($PL_{2\_target\_UL\_dB}$, $PL_{2\_target\_DL\_dB}$) partial threshold values relating to said first and second base stations respectively, and whose difference is equal to said first ($PL_{target\_UL\_dB}$) and/or second ($PL_{target\_DL\_dB}$) threshold value respectively,
and **in that** said first base station (BS1) sends, to said first mobile station (MS), a signal comprising at least one third message for configuring said first mobile station, said third configuration message comprising at least one information element, said at least one information element being representative of at least one parameter belonging to the group comprising:

- said first partial threshold value ($PL_{1\_target\_DL\_dB}$) relating to the uplink dead zone of said first base station;
- said first partial threshold value ($PL_{1\_target\_DL\_dB}$) relating to the downlink dead zone of said first base station;
- said second partial threshold value ($PL_{2\_target\_UL\_dB}$) relating to the uplink dead zone of said second base station;
- said second partial threshold value ($PL_{2\_target\_UL\_dB}$) relating to the downlink dead zone of said second base station.

8. Method according to Claim 7, **characterized in that** said comparison step consists in comparing said first and second parameters ($PL_{1\_dB}$, $PL_{2\_dB}$) with said first ($PL_{1\_target\_UL\_dB}$ or $PL_{1\_target\_DL\_dB}$) and second ($PL_{2\_target\_UL\_dB}$ or $PL_{2\_target\_DL\_dB}$) partial threshold values respectively, said radio link failure procedure being triggered when said first parameter ($PL_{1\_dB}$) is less than said first partial threshold value ($PL_{1\_target\_UL\_dB}$) relating to said uplink dead zone and said second parameter ($PL_{2\_dB}$) is greater than said second partial threshold value ($PL_{2\_target\_UL\_dB}$) relating to said uplink dead zone and/or when said first parameter ($PL_{1\_dB}$) is less than said first partial threshold value ($PL_{1\_target\_DL\_dB}$) relating to said downlink dead zone and said second parameter ($PL_{2\_dB}$) is greater than said second partial threshold value ($PL_{2\_target\_DL\_dB}$) relating to said downlink dead zone.

9. Method according to Claim 7 or 8, **characterized in that**, to perform said comparison step, said first base station (BS1) sends, beforehand, to said first mobile station (MS) a signal comprising a fourth message for configuring said first mobile station, said fourth configuration message comprising at least one information element, said at least one information element being representative of at least one event or set of events relating to said radio link failure procedure to be triggered, said at least one event or set of events being selected from among the following events or sets of events:

- an event of type 1e and an event of type 1f,
- an event of type 2a,
- an event of type 2b,
- an event of type 2c and an event of type 2d.

10. Method according to Claim 9, **characterized in that**, to trigger said radio link failure procedure, said first base station (BS1) sends, beforehand, to said first mobile station (MS), a signal comprising a fifth configuration message, said fifth configuration message comprising at least one information element, the value of said at least one information element being representative of the activation or of the non-activation of said radio link failure procedure.

11. Method according to Claim 10, **characterized in that** said fifth configuration message comprises, furthermore, at least one other information element, the value of said at least one other information element being representative of the type of said at least one event or set of events triggering said radio link failure procedure.

12. Method according to Claim 10 or 11, **characterized in that** the sending to said first mobile station of a fourth message relating to at least one event or set of events is effected if and only if said first mobile station (MS) is present in a zone which is potentially an uplink dead zone and/or a downlink dead zone.

13. Method according to one of Claims 2 to 12, **characterized in that**, before triggering said radio link failure procedure, said first mobile station (MS) sends to said first base station (BS1) at least said first and second estimated parameters ($PL_{1\_dB}$,$PL_{2\_dB}$) representative of said power attenuation losses due to the propagation of the signals from said first (BS1) and second (BS2) base stations to said first mobile station (MS).

14. Mobile telecommunication system comprising a plurality of base stations and of mobile stations, in which at least one base station and at least one mobile station implement in order to communicate a frequency division duplex mode and/or the technique of wideband code division multiple access, **characterized in that** it implements said method of reducing at least one dead zone in relation to at least one base station according to one of Claims 1 to 13.

15. Mobile station (MS), referred to as a first mobile station, of the type comprising means for communicating in the direction of at least one first base station (BS1) on at least one first frequency (f1), said first base station being comprised within a first access network, **characterized in that** said mobile station comprises the following means of:

- estimation of at least one first ($PL_{1\_dB}$) and one second ($PL_{2\_dB}$) parameters, said first parameter ($PL_{1\_dB}$) being representative of the power attenuation losses due to the propagation of the signals from said first base station (BS1) to said first mobile station (MS), said second parameter ($PL_{2\_dB}$) being representative of the power attenuation losses due to the propagation of the signals from a second base station (BS2) to said first mobile station (MS), said second base station being a neighbour of said first base station (BS1), at least one other mobile station (MS'), referred to as a second mobile station, communicating towards said second base station (BS2) on at least one second frequency (f2), said second base station being comprised within a second access network, said first and second access networks being separate and independent,

- determination of a factor referred to as a geometry factor ($PL_{1\_dB}$-$PL_{2\_dB}$) representative of a difference between said first ($PL_{1\_dB}$) and second ($PL_{2\_dB}$) estimated parameters,

- comparison of said determined geometry factor with a first predetermined threshold value ($PL_{target\_UL\_dB}$), said first threshold value being representative of one dead zone from said second mobile station (MS') to said second base station (BS2) for at least said second frequency (f2), said dead zone being referred to as an uplink dead zone and/or a second predetermined threshold value ($PL_{target\_DL\_dB}$), said second threshold value being representative of a dead zone from said first base station (BS1) to said first mobile station (MS), said dead zone being referred to as a downlink dead zone, and

- if said geometry factor ($PL_{1\_dB}$-$PL_{2\_dB}$) exceeds said first threshold value ($PL_{target\_UL\_dB}$) and/or said second threshold value ($PL_{target\_DL\_dB}$), said first mobile station interrupts the radio duplex link implemented on said first frequency (f1) between said first mobile station (MS) and said first base station (BS1).

FIG.1

# FIG.2

Operator 1

$$\left(\frac{Ec}{I0}\right)_{UL\_dB}$$

$$I_{BS1\_dBm}$$

$$ACLR_{MS}$$

$$I_{BS2\_dBm}$$

$$x_{dB}$$

Operator 2

Calculate

$$PL_{t\arg et\_dB\_UL} = \left(\frac{Ec}{I0}\right)_{UL\_dB} + I_{BS1\_dBm} - I_{BS2\_dBm} - x_{dB} - ACLR_{MS}$$

Calculate

$$PL_{1\_t\arg et\_dB\_UL} \text{ and } PL_{2\_t\arg et\_dB\_UL} \text{ such that } PL_{1\_t\arg et\_dB\_UL} - PL_{2\_t\arg et\_dB\_UL} = PL_{t\arg et\_dB\_UL}$$

OR

Transmission of event 2b with

$$S_{used} = PL_{1\_t\arg et\_dB\_UL}$$

$$S_{nonused} = PL_{2\_t\arg et\_dB\_UL}$$

Transmission of event 2c with

$$S_{nonused} = PL_{2\ t\arg et\ dB\ UL}$$

Transmission of event 2d with

$$S_{nonused} = PL_{1\ t\arg et\ dB\ UL}$$

EP 1 418 777 A1

**FIG.3**

Operator 1 | Operator 2

$\left(\dfrac{Ec}{I0}\right)_{DL\_dB}$  $z_{dB}$  $P_{T\_DL\_dBm}$  $ACS_{MS}$  $P_{T\_BS2\_dBm}$

Calculate

$$PL_{t\arg et\_dB\_DL} = \left(\frac{Ec}{I0}\right)_{DL\_dB} + P_{T\_BS2\_dBm} - P_{T\_DL\_dBm} - ACS_{MS} - z_{dB}$$

Calculate $PL_{1\_t\arg et\_dB\_DL}$ and $PL_{2\_t\arg et\_dB\_DL}$ such that $PL_{1\_target\_dB\_DL} - PL_{2\_target\_dB\_DL} = PL_{target\_dB\_DL}$

OU

Transmission of event 2b with

$S_{used} = PL_{1\_t\arg et\_dB\_DL}$

$S_{nonused} = PL_{2\_t\arg et\_dB\_DL}$

Transmission of event 2c with

$S_{nonused} = PL_{2\_t\arg et\_dB\_DL}$

Transmission of event 2d with

$S_{used} = PL_{1\_t\arg et\_dB\_DL}$

BEGIN

Reception of the threshold values of the uplink and/or downlink?

NO

YES

Reception of at least one event for the uplink and/or downlink?

NO

YES

Updating of the events with the threshold values

Triggering of an event on the uplink and/or downlink?

NO

YES

Sending of a measurement report

**FIG.4**

Prior reception of a message for activating the message link failure procedure?

NO

YES

Radio link failure

## EUROPEAN SEARCH REPORT

**European Patent Office**

**Application Number**

EP 03 36 4028

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 594 946 A (MENICH BARRY J ET AL) 14 January 1997 (1997-01-14) * abstract * * column 1, line 7 - line 18 * * column 1, line 55 - column 2, line 2 * * column 3, line 30 - column 4, line 36 * * column 7, line 34 - column 8, line 56 * * column 7, line 48 - column 8, line 22 * * figure 1 * | 1,2, 13-15 | H04Q7/36 |
| A | | 3-12 | |
| A | WO 99 14972 A (HAEMAELAEINEN SEPPO ;NOKIA MOBILE PHONES LTD (FI); LAAKSONEN NIINA) 25 March 1999 (1999-03-25) * abstract * * page 5, line 5 - page 6, line 25 * | 1-15 | |
| A | EP 1 096 822 A (MATSUSHITA ELECTRIC IND CO LTD) 2 May 2001 (2001-05-02) * abstract * * paragraphs [0021],[0022],[0028]-[0033] * * paragraphs [0039]-[0041],[0059]-[0064] * * paragraphs [0071]-[0074],[0094],[0095] * * figure 5 * | 1-15 | TECHNICAL FIELDS SEARCHED (Int.Cl.7) H04Q |

The present search report has been drawn up for all claims

| Place of search | Date of completion of the search | Examiner |
|---|---|---|
| BERLIN | 4 March 2004 | Alonso Maleta, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 36 4028

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2004

| Patent document cited in search report | | Publication date | Patent family member(s) | | Publication date |
|---|---|---|---|---|---|
| US 5594946 | A | 14-01-1997 | AU | 678943 B2 | 12-06-1997 |
| | | | AU | 5414796 A | 18-09-1996 |
| | | | CA | 2187326 A1 | 06-09-1996 |
| | | | DE | 69629773 D1 | 09-10-2003 |
| | | | EP | 0758505 A1 | 19-02-1997 |
| | | | FI | 964292 A | 25-10-1996 |
| | | | IL | 116868 A | 12-03-1999 |
| | | | JP | 9512694 T | 16-12-1997 |
| | | | WO | 9627246 A1 | 06-09-1996 |
| WO 9914972 | A | 25-03-1999 | FI | 973718 A | 18-03-1999 |
| | | | AU | 755463 B2 | 12-12-2002 |
| | | | AU | 9267798 A | 05-04-1999 |
| | | | BR | 9803438 A | 03-11-1999 |
| | | | CA | 2304050 A1 | 25-03-1999 |
| | | | CN | 1211887 A | 24-03-1999 |
| | | | EP | 1038411 A2 | 27-09-2000 |
| | | | WO | 9914972 A2 | 25-03-1999 |
| | | | US | 6363252 B1 | 26-03-2002 |
| EP 1096822 | A | 02-05-2001 | JP | 2001128215 A | 11-05-2001 |
| | | | CN | 1295390 A | 16-05-2001 |
| | | | EP | 1096822 A2 | 02-05-2001 |

EPO FORM P0459

For more details about this annex : see Official Journal of the European Patent Office, No. 12/82